# EUROPÄISCHE PATENTSCHRIFT

(11) **EP 1 877 734 B1**
(45) Veröffentlichungstag und Bekanntmachung des Hinweises auf die Patenterteilung: **09.11.2011**
(21) Anmeldenummer: 06724712.2
(22) Anmeldetag: 04.05.2006
(51) Int. Cl.: G01D 5/165, H01C 10/34

(54) **BEDIENVORRICHTUNG UND VERFAHREN ZUR AUSWERTUNG EINER BEDIENVORRICHTUNG**
CONTROL DEVICE AND METHOD FOR EVALUATING A CONTROL DEVICE
DISPOSITIF DE COMMANDE ET PROCEDE POUR EVALUER UN DISPOSITIF DE COMMANDE

(30) Priorität: 04.05.2005 DE 102005021890
(43) Veröffentlichungstag der Anmeldung: 16.01.2008
(73) Patentinhaber: E.G.O. ELEKTRO-GERÄTEBAU GmbH, 75038 Oberderdingen (DE)
(72) Erfinder: HAMM, Wolfgang A., 75015 Bretten (DE); BAIER, Martin, 76275 Ettlingen (DE); DORWARTH, Ralf, 75038 Oberderdingen (DE)
(74) Vertreter: Patentanwälte Ruff, Wilhelm, Beier, Dauster & Partner
(86) Internationale Anmeldenummer: PCT/EP2006/004176
(87) Internationale Veröffentlichungsnummer: WO 2006/117215

(56) Entgegenhaltungen:
- EP-A- 0 456 367
- EP-A- 1 018 466
- EP-A- 1 338 500
- DE-A1- 19 649 906
- US-A- 5 113 172

## Beschreibung

### Anwendungsgebiet und Stand der Technik

Die Erfindung betrifft eine Bedienvorrichtung und ein Verfahren zur Auswertung einer solchen Bedieneinrichtung, wie sie beispielsweise für ein Elektrogerät in Form eines Kochfeldes oder dergleichen eingesetzt werden kann, bei der eine Bedienbewegung entlang eines Bedienweges in ein Bediensignal umgewandelt wird. Dabei entspricht der Bedienweg verschiedenen Bedienstufen oder Bedienarten und das Bediensignal ist abhängig von dem zurückgelegten Bedienweg.

Bei einer derartigen Ausführung einer Bedienvorrichtung können Widerstandsbahnen vorgesehen sein an einem Drehknebel-Schalter, entlang derer ein Schleifer zum Abgriff gedreht werden kann. Ein anderes Ende dieses Schleifers verläuft auf einer parallelen Leiterbahn zum Abgriff des Signals. Abhängig vom Bedienweg bzw. der Bedienstellung liegt an dieser Stelle ein spezifischer elektrischer Widerstand vor oder ein bestimmter Spannungswert, der ausgewertet werden kann und einer bestimmten Bedienstufe oder Bedienart zugeordnet werden kann.

Problematisch hierbei ist, dass mögliche Fehler wie ein verbogener oder sogar gebrochener Schleifer ebenso wie schadhafte Widerstands- bzw. Leiterbahnen nicht sicher erkannt werden können bzw. nur mit großem Aufwand. Darunter kann die Bedien- und Betriebssicherheit leiden.

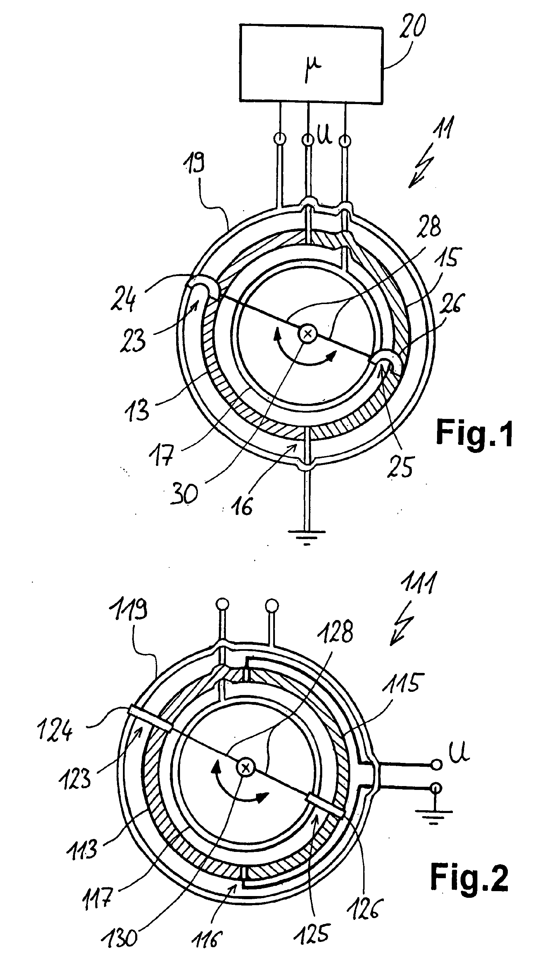

Die EP 1 388 500 A1 zeigt eine grundsätzlich ähnliche Bedienvorrichtung, die auch für ein Elektrogerät verwendet werden kann, wobei eine Drehung in ein Bediensignal umgesetzt wird. Aus der Figur 2 sind verschiedene runde Messbahnen in Form von Widerstandsbahnen zu erkennen, an denen Schleifer anliegen.

Die EP 456 367 A1 zeigt eine entsprechende Bedienvorrichtung, allerdings mit einer linearen Bewegung als Bedienung. Hier gibt es gar keine runden Meßbahnen.

Die US 5,113,172 zeigt Messbahnen, die gemäß der Figur 2 gleich groß sind und bei Figur 2 über einen Winkel von etwa 300° laufen, während sie bei den Figuren 5 und 6 jeweils umlaufende Teilkreise sind. Die Schleifer können beispielsweise gemäß Figur 6C versetzt zueinander sein mit einem Winkel von etwa 90°. Bei der EP 1 018 466 A2 ist etwas ähnliches offenbart, hier ist lediglich ein ganz geschlossener Kreis mit einer gleichmäßigen Unterteilung in zwei gleich große Teilkreise der Widerstandsbahn dargestellt. Auch hier sind die Schleifer versetzt zueinander. Dies offenbart auch die DE 196 49 906 A1.

### Aufgabe und Lösung

Der Erfindung liegt die Aufgabe zugrunde, eine eingangs genannte Bedienvorrichtung und ein Auswerteverfahren zu schaffen, mit denen die Nachteile des Standes der Technik vermieden werden können und insbesondere ein sicherer Betrieb samt Überprüfung der Bedienvorrichtung auf fehlerfreien Zustand bzw. Betrieb möglich ist.

Gelöst wird diese Aufgabe durch eine Bedienvorrichtung mit den Merkmalen des Anspruchs 1 und ein Verfahren mit den Merkmalen des Anspruchs 8 sowie 9. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht. Merkmale, die sowohl die Bedienvorrichtung als auch das Auswerteverfahren beschreiben, werden im folgenden teilweise nur einmal erläutert. Sie gelten jedoch unabhängig davon für sämtliche erfindungswesentlichen Aspekte.

Es sind mindestens zwei Messbahnen vorgesehen, die jeweils die gleichen physikalischen Eigenschaften aufweisen. Diese physikalischen Eigenschaften werden jeweils dazu verwendet, eine Messgröße abzugreifen. Die physikalische Eigenschaft kann sich bei den Messbahnen von ihrem jewieligen Anfang bis zu ihrem jeweiligen Ende monoton zunehmend oder abnehmend ändern, insbesondere streng monoton. Dies bedeutet im Rahmen der vorliegenden Erfindung auch, dass die Änderung in Stufen erfolgen kann, wobei eine Abstufung relativ fein ist. Entlang jeder Messbahn bzw. relativ dazu ist jeweils eine Erfassungs-Einrichtung bewegbar, die als Messwert an jeder Stelle, an der sie sich gerade befindet, die Messgröße der hier vorliegenden physikalischen Eigenschaft erfasst. Des weiteren sind jeweils die Messbahnen miteinander ebenso wie die Erfassungs-Einrichtungen miteinander mechanisch gekoppelt, wobei sich bei der Bedienbewegung die Messbahnen und die Erfassungs-Einrichtungen gleichermaßen relativ zueinander bewegen und jeweils den gleichen Weg zurücklegen. Erfindungsgemäß sind die physikalischen Eigenschaften der Messbahnen derart ausgebildet, dass eine Addition der erfassten Messwerte der Erfassungs-Einrichtungen im störfreien Bedienzustand stets einen vorgegebenen bzw. bekannten Vorgabe-Wert ergibt. Insbesondere ist dieser Vorgabe-Wert entsprechend einem gespeicherten Wert.

So ist es im Rahmen der Erfindung möglich, auf der einen Seite während der Bedienbewegung entsprechend einem üblichen Vorgehen einen Messwert zu erfassen als Bediensignal, der einem zurückgelegten Bedienweg entspricht und sich demzufolge gemäß der Bedienbewegung ändert. Fällt beispielsweise eine Erfassungs-Einrichtung aus oder ermittelt sie fehlerhaft einen nicht dem zurückgelegten Bedienweg entsprechenden Messwert, so weicht die Summe der Messwerte vom Vorgabe-Wert ab. Dies kann leicht erkannt werden und bedeutet einen Stör-Zustand bzw. Fehler. Eine Erkennung kann hier auch dadurch erfolgen, dass die beiden erfassten Werte mit abgespeicherten Werten verglichen werden auf Übereinstimmung. Darauffolgend kann sich bei eine Fehler die Bedienvorrichtung abschalten oder beispielsweise einen Alarm für eine Bedienperson auslösen. Hier ist es auch möglich, in Abhängigkeit von der Größe des Abweichens abhängige unterschiedliche Reaktionen vorzusehen. Liegt das Abweichen in einem sehr geringen oder graduellen Bereich, der gleichzeitig jedoch erwartbar ist, so kann dies als Degradation der Bedienvorrichtung bzw. der Messbahnen oder der Erfassungs-Einrichtungen erkannt werden und eine Korrektur beispielsweise des Vorgabe-Wertes erfolgen. Ist die Abweichung dagegen so groß, dass sie nur durch einen Fehler verursacht sein kann, so wird dies erkannt und es erfolgt eine Signalausgabe, ein Alarm oder ein Abschalten des Elektrogeräts.

Bei der Erfindung sind die Messbahnen teilkreisartig ausgebildet. Die Messbahnen schließen dabei aneinander an.

Während also bei einer Schiebebewegung der Bedienweg vor allem in unterschiedliche Längenstufen eingeteilt ist, liegt bei einer Drehbewegung als Bedienbewegung eine Unterteilung in unterschiedliche Drehwinkel bzw. Drehstellungen vor. Abhängig vom Radius der Messbahnen kann dies natürlich jedenfalls in einen zurückgelegten Bedienweg umgerechnet werden, was es im physikalischen Sinn der Erfassung des Messwertes abhängig von der Länge des an der Messbahn zurückgelegten Bedienweges eigentlich auch ist.

Bei einer Ausbildung der Erfindung verläuft neben jeder Messbahn eine Erfassungs-Bahn, welche mit der Erfassungs-Einrichtung zusammenwirkt. Die Erfassungs-Bahn dient dazu, den von der Erfassungs-Einrichtung erfassten Messwert abzugreifen und einer Auswertung oder Steuerung odgl. zuzuführen. Messbahnen und Erfassungs-Bahnen, die einander zugeordnet sind, verlaufen vorteilhaft parallel zueinander. Es ist dabei vorgesehen, dass die Messbahnen und die Erfassungs-Bahnen teilkreisförmig gebogen sind. Sie entsprechen der oben beschriebenen Ausbildung mit Messbahnen, die aneinander angeschlossen einen Vollkreis ergeben, sowie mit entsprechenden Erfassungs-Bahnen.

Um eine stets gegebene Eindeutigkeit zwischen an jeder Erfassungseinrichtung erfassbarer Messgröße und Position bzw. Winkelposition erfassen zu können, ist erfindungsgemäß die Teilung der Messbahn in zwei unterschiedliche Teilkreise vorgesehen, von denen einer mehr als 180° und der andere weniger als 180° aufweist. Beispielsweise kann der Unterschied beim Bogenwinkel 20° bis 30° betragen, möglich sind jedoch auch kleinere und größere Werte. In diesem Fall können die Erfassungseinrichtungen weiterhin genau gegenüberliegen bzw. um einen Winkel von 180° verdreht sein.

Bei dieser sozusagen unsymmetrischen Ausgestaltungsmöglichkeit ist eine eindeutige Zuordnung gegeben zwischen den beiden an den Erfassungseinrichtungen erfassbaren Messwerten und der jeweiligen Winkel- bzw. Drehposition. Sind in dem Speicher der Erfassungs-Einrichtung bzw. einer zugehörigen Steuerung jeweils die Zuordnungen zwischen diesen Messgrößen und einer Drehposition abgespeichert, so kann aus den Messgröße an sich sowohl auf ordnungsgemäßes Funktionieren der Bedienvorrichtung als auch auf den jeweils eingestellten Drehwinkel geschlossen werden.

Bei einer weiteren Ausbildung der Erfindung ist es möglich, dass die Messbahnen einen sich entsprechend verändernden elektrischen Widerstand aufweisen, der dann die physikalische Eigenschaft ist bzw. es wird entlang der Messbahnen über die Erfassungs-Einrichtungen der elektrische Widerstand als Messgröße erfasst über die Zwischenstufe einer Spannungsmessung und dieser bildet jeweils den Messwert. Dabei ist es möglich, dass die Bedienvorrichtung Kontaktschleifer bzw. Abnehmer aufweist. Damit kann ein Messwert abgegriffen werden und der elektrische Widerstand bzw. eine Spannung an einer bestimmten Stelle einer Messbahn durch die Erfassungs-Einrichtung erfasst werden. Werden Kontaktschleifer odgl. für die Erfassung eingesetzt, so sollten sie mit einem Ende an der Messbahn entlang laufen und mit einem anderen Ende oder einem elektrischen Anschluss, wie einem Kabel odgl., an eine Signalabnahme geführt sein, insbesondere eine Erfassungs-Bahn. Eine besonders einfache Ausbildung erhält man, wenn die Messbahnen jeweils aus gleichem Widerstandsmaterial bestehen mit gleichbleibendem Widerstand pro Längeneinheit. Daran kann eine Spannung angelegt werden, die sich entsprechend des Abstands von dem Einspeiseort gleichmäßig verändert, nämlich mit größerer Entfernung geringer wird. Unterschiedliche Widerstandsverläufe können einfach durch unterschiedliche Breiten der Widerstandsbahnen erzeugt werden.

Vorteilhaft kann vorgesehen sein, dass eine solche Erfassungs-Bahn parallel bzw. neben einer zugehörigen Messbahn verläuft. Bei einer zuvor angesprochenen Ausführung mit zwei halbkreisartigen Messbahnen, welche kreisartig aneinander anschließen, ist es möglich, eines Erfassungs-Bahn innerhalb des Kreises und eine Erfassungs-Bahn radial außerhalb des Kreises der Messbahnen verlaufen zu lassen. So ist es über eine volle Drehung möglich, jeweils unterschiedliche Messwerte zu erzeugen und somit bei einer entsprechend möglichen feinen Unterteilung eine Vielzahl unterschiedlicher Bediensignale zu erzeugen. Eine Ausbildung der Messbahnen als sich verändernde elektrische Widerstandsbahnen samt Messwert, Abgriff über Schleifer oder Kontaktabnehmer oder dergleichen, ist besonders einfach aufzubauen. Dabei kann hier vor allem auch auf bekanntes Wissen zu Drehpotentiometern oder dergleichen zurückgegriffen werden, insbesondere was die Ausbildung der Schleifer und der Widerstandsbahnen betrifft.

Bei einer alternativen Ausgestaltung der Erfindung können die Messbahnen sich ändernde optische Eigenschaften aufweisen als Messgröße. Insbesondere bietet sich hier eine zunehmende oder abnehmende Lichtdurchlässigkeit an. Des weiteren sind sich verändernde Reflexions- oder Streueigenschaften gerade bei optischen Oberflächen möglich. Ein solcher Aufbau kann ähnlichen Grundprinzipien folgen wie der zuvor beschriebene. Die Messbahnen sind gebogen und kreisartig aneinander angeschlossen für eine Dreh-Bedienbewegung.

Zur Erfassung der sich ändernden optischen Eigenschaften mit zunehmender oder abnehmender Lichtdurchlässigkeit können die Erfassungs-Einrichtungen Lichtschranken aufweisen. Zwischen der Lichtschranke verläuft eine Messbahn. Es ist dabei vorteilhaft für eine Messwerterfassung bzw. elektrische Signalübertragung, wenn die Lichtschranken der Erfassungs-Einrichtungen fest angeordnet sind. Relativ dazu können die Messbahnen bewegbar sein, beispielsweise in der Form von Streifen oder Scheiben mit den vorbeschriebenen optischen Eigenschaften.

In einer weiteren alternativen Ausgestaltung der Erfindung können die Messbahnen als Messgröße sich ändernde magnetische Eigenschaften aufweisen, ähnlich wie der zuvor beschriebene elektrische Widerstand oder die optischen Eigenschaften. Hier können als Messgröße beispielsweise eine sich verändernde Magnetfeldstärke oder Permeabilität der Messbahnen verwendet werden.

Zur Auswertung von magnetischen Eigenschaften als Messgröße können die Erfassungs-Einrichtungen Magnetfeldsensoren aufweisen, beispielsweise Hall-Sensoren. Auch hier kann es wie zuvor beschrieben von Vorteil sein, die Erfassungs-Einrichtungen stationär anzuordnen und demgegenüber die Messbahnen beweglich auszugestalten. Dies weist vor allem den großen Vorteil auf, dass die Signalübertragung bei Lichtschranken oder Magnetfeldsensoren aufwendiger über Schleifer oder dergleichen zu realisieren ist als bei einer bloßen Widerstandsmessung.

Weitere Alternativen können noch beinhalten, dass sich als Messgröße kapazitive Eigenschaften ändern, welche über kapazitive Sensoren oder Kondensatoranordnungen ausgewertet werden.

An die Erfassungs-Einrichtungen angeschlossen ist eine Signalverarbeitung oder Auswertung, in der zum einen anhand der erfassten Messwerte Bediensignale erzeugt werden, welche entsprechenden Bedienfunktionen zugeordnet werden. Des weiteren kann hier auch die erfindungsgemäße Addition der Messwerte stattfinden mit einer Überwachung, ob diese dem vorgegebenen Vorgabe-Wert entsprechen. Dieser kann sich beispielsweise bei erfassten Messwerten ändern, also über den Bedienweg hinweg.

### Kurzbeschreibung der Zeichnungen

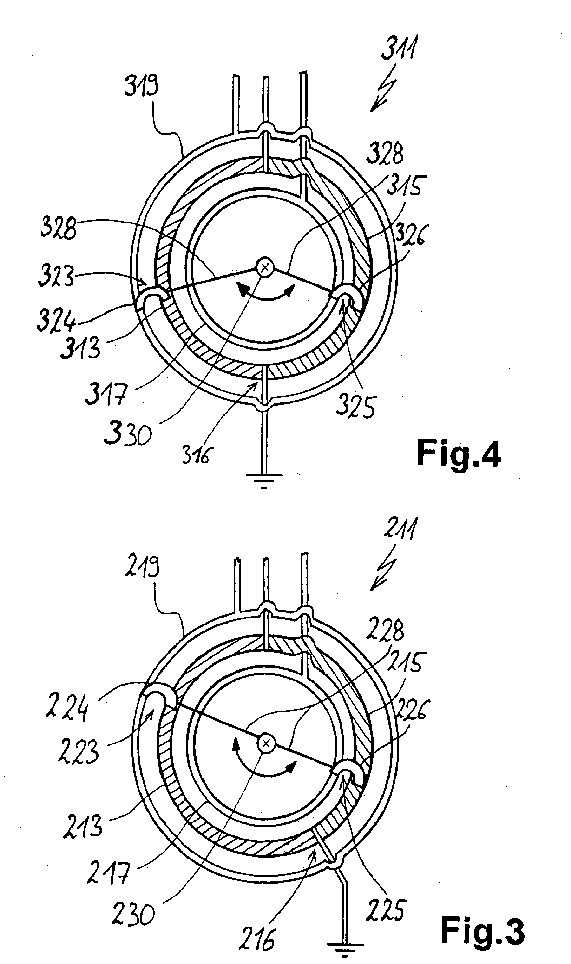

Ein Ausführungsbeispiel der Erfindung ist in der Fig. 3 schematisch dargestellt und wird im folgenden näher erläutert. In den Zeichnungen zeigt:
- Fig. 1: eine Anordnung gemäß dem Stand der Technik von zwei aneinander anschließende halbkreisförmigen Messbahnen mit sich veränderndem elektrischen Widerstand und mit zwei gerade zueinander stehenden Schleifern zum Signalabgriff,
- Fig. 2: eine Variation der Anordnung nach Fig. 1 mit veränderter Kontaktierung gemäß dem Stand der Technik,
- Fig. 3: eine weitere Variation der Bedienvorrichtung nach Fig. 1 gemäß der Erfindung mit nicht symmetrisch geteilten Messbahnen und
- Fig. 4: eine weitere Variation der Bedienvorrichtung nach Fig. 1 mit winklig zueinander stehenden Schleifern, die nicht zur beanspruchten Erfindung gehört.

### Detaillierte Beschreibung der Ausführungsbeispiele

In Fig. 1 ist eine Bedienvorrichtung 11 gemäß dem Stand der Technik dargestellt, wie sie insbesondere für ein Elektrogerät eingesetzt werden kann als Bedienvorrichtung mit Bedienknebel, beispielsweise um die Leistung einer Kochstelle einzustellen. Auf einem Träger wie einer Leiterplatte sind zwei unterschiedlich schraffierte Messbahnen 13 und 15 aufgebracht. Sie sind halbkreisförmig ausgebildet und schließen aneinander an, unten am unteren Verbindungspunkt 16. Sie sind als Widerstandsbahn ausgelegt, wobei sie so ausgestaltet sind, dass sie einen gleichartigen Aufbau haben und mit zunehmender Länge einen gleichmäßig ansteigenden bzw. abnehmenden elektrischen Widerstand aufweisen.

Dies bedeutet, dass bei am oberen Verbindungspunkt angelegter Spannung U und am auf Masse gelegten unteren Verbindungspunkt die Spannung entlang der Messbahn 13 von oben nach unten entgegen dem Uhrzeigersinn abnimmt. Wegen des gleichartigen Aufbaus der Messbahnen verändert sich der elektrische Widerstand der Messbahn nämlich direkt mit ihrer Länge. Bei der rechten Messbahn 15 gilt das Gleiche. Auch hier ist nahe am oberen Verbindungspunkt die anliegende Spannung gleich U. Am unteren Verbindungspunkt 16 ist sie Null, da dieser gegen Masse gelegt ist.

Innerhalb der Messbahnen 13 und 15 verläuft eine innere Erfassungsbahn 17, welche aus niederohmigem Material besteht. Außerhalb der Messbahnen verläuft eine äußere Erfassungsbahn 19 aus gleichem Material wie die innere Erfassungsbahn 17. Wie zu erkennen ist, verlaufen die durch die unterschiedlichen Bahnen gebildeten Kreise konzentrisch.

Die Erfassungsbahnen 17 und 19 weisen elektrische Anschlüsse auf, ebenso wie die Messbahnen 13 und 15. Diese sind zu einer Steuerung 20 geführt, welche sowohl die Spannung U an die Messbahnen 13 und 15 anlegt als auch die Auswertung der Erfassungsbahnen 17 und 19 vornimmt.

Links in Fig. 1 ist eine Erfassungs-Einrichtung 23 dargestellt mit einem H Schleifer 24, der sowohl an der linken Messbahn 13 als auch an der äußeren Erfassungsbahn 19 anliegt entsprechend einem normalen Abgriff-Schleifer. Rechts in Fig. 1 ist eine weitere Erfassungseinrichtung 25 dargestellt mit einem Schleifer 26, der an der rechten Messbahn 15 und der inneren Erfassungsbahn 17 anliegt. Die Erfassungseinrichtungen 23 und 25 bzw. deren Schleifer 24 und 26 sind einander genau gegenüberliegend angeordnet. Sie sind über eine mechanische Verbindung 28, beispielsweise eine Verbindungsbrücke, miteinander verbunden. Des weiteren sind sie über diese mechanische Verbindung 28 mit einer durch den Mittelpunkt der Kreisbahnen verlaufenden Welle 30 eines Bedienknebels verbunden. Dies bedeutet, dass bei Drehen der Welle 30 als Bedienbewegung gemäß dem Pfeil die Schleifer 24 und 26 entlang der verschiedenen Bahnen laufen. Dabei liegen die Schleifer 24 und 26 in jeder Stelle einander genau gegenüber.

Zur Auswertung eines zurückgelegten Bedienweges bzw. einer bestimmten Winkelstellung als Bedienstellung wird nun für jeden der beiden Schleifer 24 oder 26 ein Spannungswert durch die Steuerung 20 erfasst. Über den bekannten Zusammenhang zwischen Winkelstellung und Spannung, insbesondere wegen der dabei zurückgelegten Länge des Weges entlang einer der Messbahnen 13 und 15, kann eine Spannung erfasst werden, welche genau diesen Winkel repräsentiert. Diese wird in entsprechende Bediensignale umgesetzt. Der Zusammenhang zwischen Winkelstellung und Spannung als Messwert ist in einem Speicher, insbesondere in der Steuerung 20, abgespeichert. Dabei kann für jeden an einem Schleifer erfassten Spannungswert die entsprechende Winkelstellung abgespeichert sein.

Ein Vorteil gemäß diesem Aspekt liegt darin, dass in der Steuerung 20 die an den Schleifern 24 und 26 abgegriffenen Spannungswerte addiert werden können. Wegen der sich linear mit zurückgelegter Länge der Messbahnen 13 und 15 verändernden bzw. von oben nach unten abnehmenden Spannung als Anteil an der angelegten Spannung U ergibt die Addition der abgegriffenen Werte genau oder nahezu diese Spannung U. Somit kann zusätzlich zu der Bestimmung der Winkelstellung der Schleifer 24 und 26 bzw. der Welle 30 des Bedienknebels eine Kontrolle der ordnungsgemäßen Funktion der Bedienvorrichtung 11 erfolgen. Weicht die Summe der an den Schleifern 24 und 26 abgegriffenen Spannungswerte erkennbar oder signifikant von dem zu erwartenden Wert U der angelegten Spannung ab, so muss ein Fehlerfall vorliegen. Dies kann für die Ausgabe eines entsprechenden Signals an einen Bediener verwendet werden. Des weiteren kann die Steuerung 20 das zugehörige Elektrogerät teilweise oder vollständig abschalten. Insbesondere kann die Steuerung 20 erkennen, dass das gewonnene Bediensignal entsprechend der Stellung der Welle 30 und der Schleifer 24 und 26 nicht verwertbar ist, da ein Fehler vorliegen muss.

Als Variation zu Messbahnen 13 und 15 mit linearer Änderung des elektrischen Widerstands über ihre Länge ist es möglich, diese Änderung auch nicht linear bzw. degressiv oder progressiv an- oder absteigend auszubilden. Dabei ist jedoch entweder bzgl. des Verlaufs des Widerstands darauf zu achten, dass seine Addition an gegenüberliegenden Punkten stets einen konstanten Wert ergibt. Alternativ ist es auch denkbar, in der Steuerung 20 Werte abzuspeichern, die eine Zuordnung zwischen der entsprechenden Addition der abgegriffenen Spannungen von gegenüberliegenden Punkten aus mit dem dieser Stellung entsprechenden einzelnen Widerständen an jeder der Messbahnen bzw. der Schleifer 24 und 26 möglich machen. So kann die Steuerung 20 auch feststellen, ob bei jeweils bestimmten bekannten Werten für den Messwert sozusagen die Kontrollsumme dem entspricht, was zu erwarten ist bei ordnungsgemäßer Funktion. Dabei ist zu beachten, dass die erstgenannte Variante mit der jeweils gleichbleibenden Summe des elektrischen Widerstandes an gegenüberliegenden Punkten der Messbahnen einfacher auszuwerten ist und eine höhere Funktionssicherheit gewährleistet.

Beginnt der Schleifer 24 beispielsweise an der obersten Stellung, also am oberen Verbindungspunkt zwischen den Messbahnen 13 und 15, und wird im Uhrzeigersinn gedreht, so liegt zuerst die volle Spannung U an, welche dann über die entsprechende äußere Erfassungsbahn 19 abgegriffen werden kann. Entlang des Bedienweges bzw. der Bedienbewegung nimmt die Spannung am Schleifer 24 ab, bis sie an der unteren Stelle am unteren Verbindungspunkt zwischen den Messbahnen 13 und 15 Null erreicht. Beim weiteren Drehen über diesen Punkt hinaus beginnt die Spannung wieder, von Null ausgehend anzusteigen und sozusagen spiegelbildlich zu dem vorherigen Abnehmen zuzunehmen.

In Fig. 2 ist eine abgewandelte Bedienvorrichtung 111 gemäß dem Stand der Technik dargestellt mit anders als bei Fig. 1 ausgebildeten Anschlüssen an die Erfassungsbahnen 117 und 119. Dies ändert aber nichts an der prinzipiellen Funktion.

In Fig. 3 ist eine weitere Variante der Bedienvorrichtung 211 ähnlich Fig. 1 dargestellt, die der Erfindung entspricht. Der wesentliche Unterschied zu der Bedienvorrichtung 11 nach Fig. 1 liegt jedoch darin, dass hier die Teilung der beiden Messbahnen 213 und 215, welche zusammen einen Vollkreis ergeben, nicht symmetrisch ist. Dies wird dadurch verdeutlicht, dass der untere Verbindungspunkt 216, welcher gegen Masse geschlossen ist, sozusagen gegen den Uhrzeigersinn verdreht ist. Daraus resultiert, dass die Messbahn 213 einen Winkel von etwa 210° überstreicht und die Messbahn 215 lediglich einen Winkel von 150°. Insofern liegt eine unsymmetrische Aufteilung der Messbahnen vor.

Die Erfassungseinrichtungen 223 und 225 bzw. deren mechanische Verbindung 228 in Form zweier Arme ausgehend von der Welle 230 ist gerade. Es liegt also jeweils ein Winkel von 180° dazwischen.

Bei dieser Bedienvorrichtung 211 ist offensichtlich, dass für jede Position jeweils ein einziges Paar von Messwerten der Messgrößen an den Schleifern 224 und 226 möglich ist. Insbesondere ist auch eine Eindeutigkeit hinsichtlich der Drehrichtung gegeben.

Da hier jedoch nicht mehr davon ausgegangen werden kann, dass eine Addition der Werte der Messwerten an den Schleifern 224 und 226 die an den oberen Verbindungspunkt angelegte Spannung U ergibt, muß hier mit der vorgenannten Abspeicherung von der Zuordnung verschiedener Paare von Messwerten zueinander mit verbundenen Drehwinkelstellungen oder Drehpositionen gearbeitet werden. Hierzu können jedoch in einer Steuerung ähnlich der Steuerung 20 gemäß Fig. 1 die Werte abgespeichert sein.

Bei der weiteren Abwandlung nach Fig. 4, die nicht zur beanspruchten Erfindung gehört ist zu erkennen, dass die Messbahnen 313 und 315 entsprechend Fig. 1 symmetrisch aufgeteilt sind, sich also die beiden Verbindungspunkte genau gegenüberliegen. Allerdings sind hier die Erfassungseinrichtungen 323 und 325 bzw. die entsprechenden Schleifer 324 und 326 sowie die mechanischen Verbindungen 328 versetzt zueinander. Sie schließen insbesondere nach unten weisend einen Winkel von 150° ein.

Entsprechend den Ausführungen zu Fig. 3 ist auch bei dieser Ausbildung der Bedienvorrichtung 311 bei jeder Drehstellung eine eindeutige Zuordnung gegeben zwischen Messwerten an den Schleifern 324 und 326 sowie entsprechender Drehposition. Ähnlich wie zu Fig. 3 ausgeführt sind diese Werte in einem Speicher abzuspeichern und entsprechend aufzurufen zur Bestimmung der korrekten Funktion der Bedienvorrichtung 311 sowie vor allem zur Bestimmung der Drehposition.

Ein weiterer großer Vorteil dieser Gestaltungen liegt darin, dass die Herstellung der Bahnen einfach ist. Insbesondere braucht nur eine einzige Messbahn durch einen Carbon-Druck odgl. auf einen Träger aufgebracht zu werden. Die Bahnen können durch die innenliegende Erfassungsbahn auch relativ eng gesetzt werden und somit auch eine kleine Baugröße erreicht werden. Die Schleifer können bei gleichen Abständen zu beiden Erfassungsbahnen identisch sein.

Bei einer vorteilhaften Bedienvorrichtung gemäß der Erfindung zur Umsetzung einer Bedienbewegung entlang eines Bedienweges in ein Bediensignal, wobei der Bedienweg verschiedenen Bedienstufen oder Bedienarten entspricht, sind zwei Messbahnen vorgesehen mit sich veränderndem Widerstand. An beide wird an einem Verbindungspunkt eine Spannung U angelegt, die über zwei einander gegenüberliegende und miteinander verbundene Schleifer abgegriffen wird. Der andere Verbindungspunkt ist gegen Masse gelegt. Weichen die erfassten Werte der abgegriffenen Spannungen von entsprechenden abgespeicherten Werten bzw. Wertepaaren ab, was über eine Steuerung erkannt werden kann, so muß ein Fehler an der Bedienvorrichtung vorliegen, beispielsweise ein gebrochener Schleifer. So kann eine Überprüfung stattfinden.

## Patentansprüche

1. Bedienvorrichtung (211), insbesondere für ein Elektrogerät wie beispielsweise ein Kochfeld, zur Umsetzung einer Bedienbewegung entlang eines Bedienweges in ein Bediensignal, wobei der Bedienweg verschiedenen Bedienstufen oder Bedienarten entspricht und ein Bediensignal abhängig ist von dem zurückgelegten Bedienweg, wobei mindestens zwei Messbahnen (213, 215) mit jeweils gleichen physikalischen Eigenschaften vorgesehen sind mit einer Messgröße einer physikalischen Eigenschaft, die sich bei beiden Messbahnen von dem jeweiligen Anfang bis zum Ende monoton zunehmend oder abnehmend verändert, wobei entlang jeder Messbahn jeweils eine Erfassungs-Einrichtung (223, 225) für einen Messwert von deren physikalischer Eigenschaft relativ dazu bewegbar ist, wobei jeweils die Messbahnen miteinander und die Erfassungs-Einrichtungen miteinander mechanisch verbunden bzw. gekoppelt (228) sind und sich die Messbahnen und die Erfassungs-Einrichtungen bei der Bedienbewegung gleichermaßen relativ zueinander bewegen und jeweils den gleichen Weg zurücklegen, wobei die physikalischen Eigenschaften der Messbahnen (213, 215) derart ausgebildet sind, dass die Addition der Messwerte im störfreien Bedienzustand stets einen vorgegebenen Vorgabe-Wert ergibt, wobei die Messbahnen (213, 215) jeweils teilkreisförmig ausgebildet sind und die Bedienbewegung eine Drehbewegung ist, wobei zwei Messbahnen derart ausgebildet sind, dass sie aneinander anschließen und einen Vollkreis ergeben und die Erfassungseinrichtungen einen Winkel von ca. 180° dazwischen einschließen, **dadurch gekennzeichnet, dass** die Messbahnen (213, 215) in zwei unterschiedlich große Teilkreise geteilt sind.

2. Bedienvorrichtung nach Anspruch 1, **dadurch gekennzeichnet, dass** der Vorgabe-Wert und auch die einzelnen Werte für jede Stellung bzw. jeden Punkt einer Messbahn in einem Speicher abgespeichert ist zur Ermittlung der Stellung der Erfassungs-Einrichtung (223, 225), wobei insbesondere der Vorgabe-Wert zusammen mit den Messwerten bzw. im Zusammenhang zu diesen gespeichert ist.

3. Bedienvorrichtung nach einem der vorhergehenden Ansprüche, **gekennzeichnet durch** eine Fehlerausgabe bei einem Abweichen der Addition der Messwerte von dem Vorgabe-Wert bei einem Bedienzustand, wobei dieser Bedienzustand ein fehlerhafter Bedienzustand ist.

4. Bedienvorrichtung nach einem der vorhergehenden Ansprüche, **dadurch gekennzeichnet, dass** neben jeder Messbahn (213, 215) eine Erfassungsbahn (217, 219) mit einer Erfassungs-Einrichtung (223, 225) für die physikalische Eigenschaft verläuft, wobei vorzugsweise Messbahn und zugeordnete Erfassungsbahn parallel bzw. mit gleichem Abstand zueinander verlaufen.

5. Bedienvorrichtung nach einem der vorhergehenden Ansprüche, **dadurch gekennzeichnet, dass** die Messbahnen (213, 215) einen sich veränderten elektrischen Widerstand aufweisen als physikalische Eigenschaft bzw. der elektrische Widerstand die Messgröße bildet.

6. Bedienvorrichtung nach Anspruch 5, **dadurch gekennzeichnet, dass** zur Erfassung des Messwertes bzw. des elektrischen Widerstandes Kontaktschleifer (224, 226) vorgesehen sind als Erfassungs-Einrichtung (223, 225), die gleichzeitig eine parallel verlaufende Erfassungsbahn (217, 219) kontaktieren.

7. Bedienvorrichtung nach Anspruch 1 und Anspruch 5 oder 6, **dadurch gekennzeichnet, dass** eine Erfassungsbahn (217) radial innerhalb der Messbahnen (213, 215) verläuft und eine Erfassungsbahn (219) radial außerhalb der Messbahnen verläuft, wobei vorzugsweise die beiden Erfassungsbahnen jeweils umlaufende Vollkreise bilden.

8. Verfahren zur Auswertung einer Bedienvorrichtung (211) nach einem der vorhergehenden Ansprüche, **dadurch gekennzeichnet, dass** die mindestens zwei Messwerte addiert werden und im störfreien Betriebszustand einen vorgegebenen Vorgabe-Wert ergeben, wobei bei einer Abweichung der Addition der beiden Messwerte von dem Vorgabe-Wert eine Fehlermeldung erzeugt bzw. ausgegeben wird.

9. Verfahren zur Auswertung einer Bedienvorrichtung (211) nach einem der Ansprüche 1 bis 7, **dadurch gekennzeichnet, dass** die erfassten Messwerte mit gespeicherten Messwerten verglichen werden und aus den einzelnen Messwerten und aus ihrer Summe auf die einwandfreie Funktion der Bedienvorrichtung und auf den Bedienzustand der Bedienvorrichtung geschlossen wird.

10. Verfahren nach Anspruch 8 oder 9, **dadurch gekennzeichnet, dass** die sich gleichmäßig über den Bedienweg ändernden erfassten Messwerte jeweils einzeln ausgewertet werden und Bediensignalen gleichgesetzt werden, wobei bei unterschiedlichen Bediensignalen unterschiedliche Bedienbefehle vorgesehen sind bzw. erzeugt werden als Ausgabe der Bedienvorrichtung (211).

## Claims

1. Control device (211), in particular for electrical equipment such as a cooking hob, for converting a control movement along a control path into a control signal, wherein the control path corresponds to various operating levels or operating modes, and a control signal depends on the control path travelled, whereby at least two measuring tracks (213, 215) each having the same physical properties have a measurable parameter of a physical property that changes along the two measuring tracks, increasing or decreasing monotonically from the beginning to the end of each, whereby along each measuring track a detection device (223, 225) for a measurement of its physical properties can be moved in relation to it, whereby the measuring tracks are mechanically connected and the detection devices are mechanically connected or coupled (228), and the measuring track and the detection devices move relative to one another equally in response to the control movement, each covering the same distance, whereby the physical properties of the measuring tracks (213, 215) are arranged in such a way that the addition of the measurements when in a fault-free operating condition always yields a specified value, whereby the measuring tracks (213, 215) are each formed as of part of a circle and the control movement is a rotary movement, whereby two measuring tracks are arranged in such a way that they are adjacent to one another and create a complete circle and an angle of about 180° is enclosed between the detection devices, **characterised in that** the measuring tracks (213, 215) are divided into two partial circles each having different sizes.

2. Control device according to Claim 1, **characterised in that** both the specified value and the individual values for each position or point on the measuring track are stored in a memory in order to determine the position of the detection device (223, 225), whereby in particular the specified value is stored together with or in relationship to the measurements.

3. Control device according to one of the foregoing claims, **characterised by** a fault output when the addition of the measurements differs from the specified value in an operating status, where this operating status is a faulty operating status.

4. Control device according to one of the foregoing claims, **characterised in that** a detection track (217, 219) with a detection device (223, 225) for the physical property runs next to each measuring track (213, 215), whereby preferably the measuring track and the associated detection track are aligned parallel to one another or maintain a constant distance to one another.

5. Control device according to one of the foregoing claims, **characterised in that** the measuring tracks (213, 215) feature a changing electrical resistance as the physical property, or where the electrical resistance constitutes the measurable parameter.

6. Control device according to Claim 5, **characterised in that** contact sliders (224, 226) are provided in order to detect the measurement or the electrical resistance, as the detection equipment (223, 225), which simultaneously contact a detection track (217, 219) that runs in parallel.

7. Control device according to Claim 1 and Claim 5 or 6, **characterised in that** one detection track (217) runs inside the radius of the the measuring tracks (213, 215), and one detection track (219) runs outside the radius of the measuring tracks, whereby preferably the two detection tracks each form complete circles.

8. Method for evaluating a control device (211) according to one of the foregoing claims, **characterised in that** at least two measurements are added, yielding a particular specified value when in a fault-free operating condition, whereby a difference in the sum of the two measurements from the specified value causes a fault signal to be generated or output.

9. Method for evaluating a control device (211) according to one of Claims 1 to 7, **characterised in that** the measurements detected are compared with the stored measurements, and where the individual measurements and their sum are used to confirm proper function of the control device and the operating status of the control device.

10. Method according to Claim 8 or 9, **characterised in that** the measurements taken, changing evenly over the control path, are individually evaluated, and taken as operating signals, wherein different control signals cause different control commands to be given or generated as an output of the control device (211).

## Revendications

1. Dispositif de commande (211), en particulier pour un appareil électrique, par exemple une plaque de cuisson, destiné à transformer en un signal de commande un mouvement de commande le long d'une course de commande, ladite course de commande correspondant à différents types ou régimes de commande et un signal de commande étant indépendant de la course de commande parcourue, sachant qu'au moins deux voies de mesure (213, 215) sont prévues avec chacune les mêmes propriétés physiques, avec une grandeur de mesure d'une propriété physique qui subit une transformation monotone croissante ou décroissante pour les deux voies de mesure, de leur début respectif jusqu'à leur fin, que respectivement un dispositif de saisie (223, 225) d'une valeur de mesure de leur propriété physique y a un mouvement relatif le long de chaque voie de mesure, que les voies de mesure entre elles et les dispositifs de saisie entre eux sont respectivement reliés ou accouplés mécaniquement (228) et que les voies de mesure et les dispositifs de saisie sont réciproquement en mouvement relatif identique lors du mouvement de commande et parcourent respectivement le même chemin, que les propriétés physiques des voies de mesure (213, 215) sont conçues de telle sorte que l'addition des valeurs de mesure, dans un état de commande sans interférence, donne toujours une valeur par défaut prédéterminée, que les voies de mesure (213, 215) sont respectivement conçues en forme de cercle partiel et que le mouvement de commande est un mouvement rotatif, que deux voies de mesures sont conçues de telle sorte qu'elles se prolongent mutuellement et forment un cercle complet, avec un angle d'environ 180° entre les deux dispositifs de saisie, **caractérisé en ce que** les voies de mesure (213, 215) sont divisées en deux cercles partiels de différente taille.

2. Dispositif de commande selon la revendication 1, **caractérisé en ce que** la valeur par défaut ainsi que les valeurs individuelles pour chaque position ou chaque point d'une voie de mesure sont sauvegardées dans une mémoire pour déterminer la position du dispositif de saisie (223, 225), la valeur par défaut étant notamment sauvegardée conjointement avec les valeurs de mesure ou associé à ces dernières.

3. Dispositif de commande selon l'une des revendications précédentes, **caractérisé par** un message d'erreur lorsque l'addition des valeurs de mesure diverge de la valeur par défaut pour un état de commande donné, ledit état de commande étant un état de commande défectueux.

4. Dispositif de commande selon l'une des revendications précédentes, **caractérisé en ce qu'**une voie de détection (217, 219), avec un dispositif de saisie (223, 225) de la propriété physique, passe près de chaque voie de mesure (213, 215), la voie de mesure et la voie de détection correspondante étant de préférence parallèles ou équidistantes.

5. Dispositif de commande selon l'une des revendications précédentes, **caractérisé en ce que** les voies de mesure (213, 215) présentent une résistance électrique variant en tant que propriété physique ou que la résistance électrique forme la grandeur de mesure.

6. Dispositif de commande selon la revendication 5, **caractérisé en ce que**, pour la saisie de la valeur de mesure ou de la résistance électrique, sont prévus des curseurs de contact (224, 226) servant au dispositif de saisie (223, 225), lesdits curseurs établissant un contact simultané avec une voie de détection parallèle (217,219).

7. Dispositif de commande selon la revendication 1 et la revendication 5 ou 6, **caractérisé en ce qu'**une voie de détection (217) s'étend radialement à l'intérieur des voies de mesure (213, 215) et qu'une voie de détection (219) s'étend radialement à l'extérieur des voies de mesure, les deux voies de détection formant de préférence chacune des cercles complets périphériques.

8. Procédé pour évaluer un dispositif de commande (211) selon l'une des revendications précédentes, **caractérisé en ce que** les valeurs de mesure, étant au moins au nombre de deux, sont additionnées et, dans un état de fonctionnement sans interférence, donnent une valeur par défaut prédéterminée, un message d'erreur étant généré ou émis en cas de différence de l'addition des deux valeurs de mesure par rapport à la valeur par défaut.

9. Procédé pour évaluer un dispositif de commande (211) selon l'une des revendications 1 à 7, **caractérisé en ce que** les valeurs de mesure saisies sont comparées aux valeurs de mesure sauvegardées et que les valeurs de mesure individuelles et leur somme permettent de conclure au bon fonctionnement du dispositif de commande et à l'état de commande du dispositif de commande.

10. Procédé selon la revendication 8 ou 9, **caractérisé en ce que** chaque valeur de mesure saisie se modifiant régulièrement pendant la course de commande est exploitée individuellement et comparée aux signaux de commande, sachant qu'en cas de signaux de commande divergents, différents ordres de commande sont prévus ou générés sous forme d'émission du dispositif de commande (211).
